# EUROPÄISCHE PATENTSCHRIFT

(11) **EP 1 795 757 B1**
(45) Veröffentlichungstag und Bekanntmachung des Hinweises auf die Patenterteilung: **14.12.2011**
(21) Anmeldenummer: 06023141.2
(22) Anmeldetag: 07.11.2006
(51) Int. Cl.: F04D 19/04, F04D 29/02, F04D 29/08, F04D 29/52

(54) **Vakuumpumpe**
Vacuum pump
Pompe à vide

(30) Priorität: 12.12.2005 DE 102005059208
(43) Veröffentlichungstag der Anmeldung: 13.06.2007
(73) Patentinhaber: Pfeiffer Vacuum GmbH, 35614 Aßlar (DE)
(72) Erfinder: Jung, Jürgen, 35745 Herborn (DE); Stanzel, Jörg, 35583 Wetzlar (DE)

(56) Entgegenhaltungen:
- DE-A1- 3 923 946
- DE-T2- 69 717 646
- US-A- 3 208 758
- US-A- 3 747 963
- US-A- 3 989 285
- US-A1- 2003 011 143
- JOUSTEN K: "EXCERPT FROM CHAPTER 16: BAUELEMENTE DER VAKUUMTECHNIK UND IHRE VERBINDUNGEN" WUTZ HANDBUCH VAKUUMTECHNIK. THEORIE UND PRAXIS, X, XX, Nr. 8TH ED, 1. Januar 2004 (2004-01-01), Seite 634, XP009080533

## Beschreibung

Die Erfindung betrifft eine Vakuumpumpe mit einem zylindrischen Abschnitt und einem Flansch.

In der Ultrahochvakuumtechnik (UHV-Technik) müssen Metalldichtungen an den Flanschverbindungen von Vakuumkomponenten wie z.B. Vakuumkammern und Vakuumpumpen eingesetzt werden. Dies beruht auf den sehr hohen Temperturen, mit denen die UHV-Systeme ausgeheizt werden und welche für elastomere Dichtungen zu hoch sind. Zum Einsatz kommen spezielle Flansche, die aus Edelstahl hergestellt sind und Schneidkanten besitzen. Diese Schneidkanten werden in weicheres Metall gedrückt, hier findet insbesondere Kupfer Verwendung. Ein Flanschaufbau dieser Art ist in Wutz, Adam, Walcher, 8te Auflage, Seite 634 beschrieben.

Nachteilig an diesem Stand der Technik ist, dass nicht nur die Flansche selbst aus solchen Metallen wie Edelstahl hergestellt werden müssen. Im Stand der Technik lässt es sich nicht vermeiden, die kompletten Vakuumgehäuse aus dem teueren Material herzustellen. Gerade bei großen Geräten wie Vakuumkammern aber auch bei Komponenten wie Vakuumpumpen bedeutet das ein erheblichen Kostenaufwand.

Die DE 697 17 646 stellt eine Verbindungsanordnung für Ultra-Hochvakuum-Systeme vor, die alle Merkmale des Oberbegriffs des Anspruchs 1 offenbart. Ein Weichmetallabschnitt ist mit einem Hartmetallabschnitt verbunden, wobei zwischen den Abschnitten eine Sperrschicht vorgesehen ist, die die chemische Reaktion zwischen den Metallen der Abschnitte hemmen soll.

Die DE 39 23 946 betrifft eine Metalldichtflanschanordnung. Bevorzugte Gestaltungen der Schraubverbindung werden vorgeschlagen, insbesondere wird die Zahl der Schrauben betrachtet.

In der US 3 208 758 wird der Steigungswinkel der Schneidkante einer UHVgeeigneten Flanschverbindung mit metallischer Dichtung betrachtet und festgelegt.

Die US 3 989 285 spricht das Problem der galvanischen Reaktion von metallischer Dichtung und Flanschmaterial an und löst es durch eine mehrlagige Metalldichtung.

Die US 3 747 963 betrifft die Flanschausformung, die mit einer metallischen Dichtung zusammenwirkt. Die flanschseitigen Strukturen haben einen Querschnitt, der im Wesentlichen einem Vierteltorus entspricht.

Daher ist es Aufgabe der Erfindung, ein Vakuumgehäuse vorzustellen, was erheblich kostengünstiger und trotzdem UHV-tauglich ist.

Gelöst wird diese Aufgabe durch eine Vakuumpumpe mit den Merkmalen des ersten Anspruches.

Die Merkmale der Unteransprüche stellen vorteilhafte Weiterbildungen der Erfindung dar.

Der Grundgedanke ist, das Vakuumgehäuse mit einem Ring zu versehen, der den UHV-tauglichen Flansch voll oder in Teilen trägt. Dieser Ring ist seinerseits UHVdicht mit dem Vakuumgehäuse verbunden. Hierdurch ist es möglich, den Großteil des Gehäuses aus preisgünstigerem Material, beispielsweise Aluminium und dessen Legierungen, herzustellen.

Der erste Ring ist fest mit dem Vakuumgehäuse durch eine Schweißverbindung verbunden. Dies führt zu einer höheren Sicherheit gegen hohe mechanische Beanspruchung. Diese tritt dann auf, wenn es zu einem sogenannten Rotor/Stator-Crash einer Turbomolekularpumpe kommt, die über den Flansch mit dem Vakuumgehäuse verbunden oder sogar in ihr angeordnet ist.

Denkbar ist auch, Reibrührschweißen zum Verbinden zu verwenden, da dieses unter den Schweißverfahren eine besonders sichere Verbindung herstellt.

In einer anderen Ausführungsform weist der erste Ring neben seiner Flanschschneide eine weitere Schneide in Richtung Vakuumgehäuse auf. Hierdurch wird die Vakuumdichtheit dieser Anordnung deutlich verbessert.

Eine Verbesserung der Vakuumdichtheit ist auch durch eine Schneide herbeizuführen, die in radialer Richtung an dem ersten Ring angebracht ist. Eine Verbesserung der Vakuumdichtheit ist außerdem möglich, indem ein zweiter Ring zwischen erstem Ring und Vakuumgehäuse angeordnet ist. Dieser ist aus einem Material gefertigt, welches weicher als das des Gehäuses und des ersten Ringes ist. Der zweite Ring wirkt dann als Dichtung. Vorteilhaft ist es, ihn aus Kupfer zu fertigen, da dieses eine gute Anpassung der Wärmeausdehnung an andere übliche Flansch- und Gehäusematerialien erlaubt.

Vorteilhaft ist es weiterhin, den ersten Ring aus einem Edelstahl zu fertigen. Das Vakuumgehäuse wird vorteilhaft aus Aluminium hergestellt, da dieses gute Wärmeleiteigenschaften aufweist. Diese sind für das Ausheizen der Anlage von Vorteil.

In einer Ausführungsform ist das Vakuumgehäuse das Gehäuse einer Vakuumkammer. Da das Gehäuse nicht aus Stahl gefertigt werden muss, die Vakuumkammer aber mitunter große Dimensionen aufweist, ist hier der Einspareffekt besonders groß.

In einer anderen Ausführungsform ist das Vakuumgehäuse das Gehäuse einer Vakuumpumpe. Besonders vorteilhaft ist hier, dass nicht nur eine Kostenreduktion möglich wird, sondern auch ein Material eingesetzt werden kann, welches viel besser als Stahl die beim Verdichten des Gases in der Vakuumpumpe abzuführende Wärme ableiten kann.

Mit Hilfe der Abbildungen soll die Erfindung an Ausführungsbeispielen näher erläutert und die Vorteile derselben vertieft werden. Die Abbildungen zeigen:

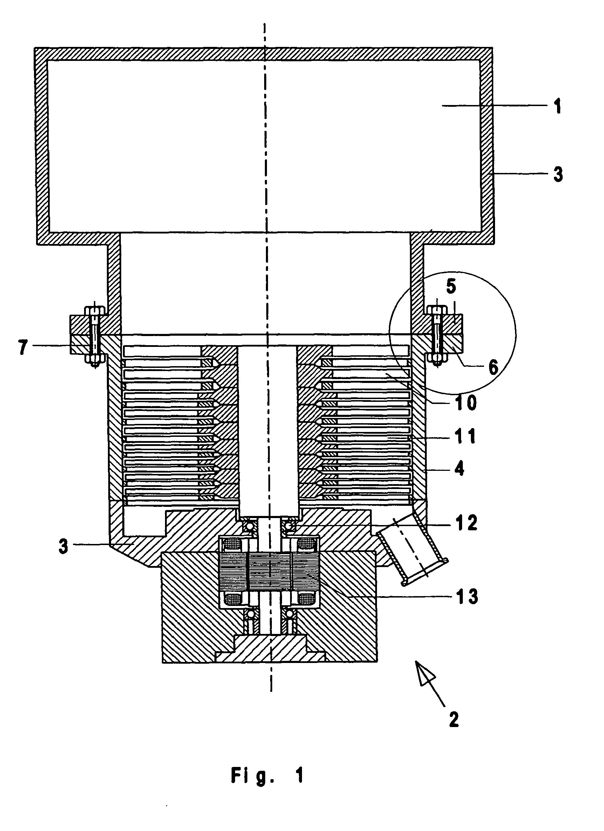

Fig. 1: Eine Prinzipdarstellung einer Vakuumanlage für Ultrahochvakuum.

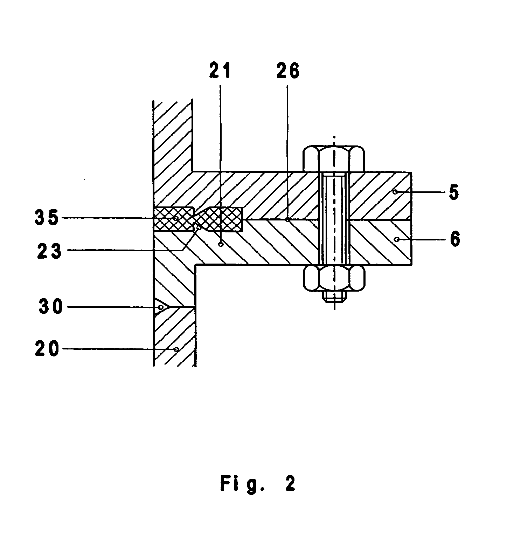

Fig. 2: Schnitt durch den Flansch eines ersten Ausführungsbeispiels.

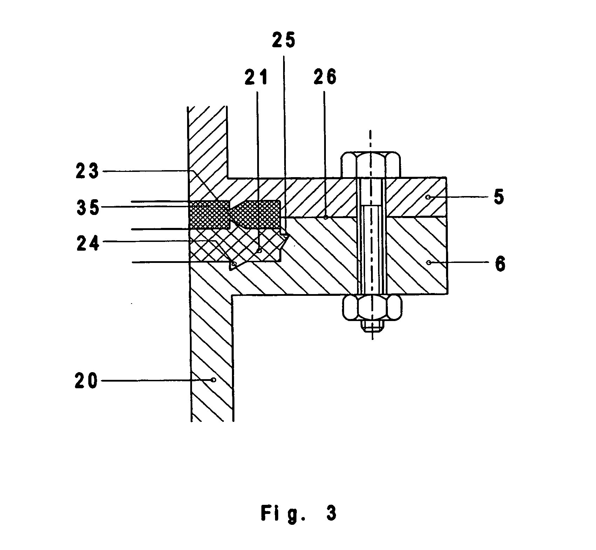

Fig. 3: Schnitt durch den Flansch eines zweiten Ausführungsbeispiels.
Fig. 4: Schnitt durch den Flansch eines dritten Ausführungsbeispiels.
Fig. 5: Schnitt durch den Flansch eines vierten Ausführungsbeispiels.
Fig. 6: Schnitt durch den Flansch eines fünften Ausführungsbeispiels.
Fig. 7: Schnitt durch den Flansch eines sechsten Ausführungsbeispiels.

Die erste Abbildung zeigt ein Hochvakuumsystem in einer vereinfachten, prinzipiellen Darstellung. Eine Ultrahochvakuumkammer 1, kurz: Kammer, ist mit einer Ultrahochvakuumpumpe 2, kurz: Pumpe, verbunden. Kammer und Pumpe besitzen jeweils ein Gehäuse 3 bzw. 4. Die Pumpe ist hier schematisch als Turbomolekularvakuumpumpe dargestellt, mit einem Rotor 10, welcher aus einer Welle und daran befestigten Flügeln besteht, und mit einem Stator 11, in dem Distanzringe und Flügelscheiben angeordnet sind. Der Rotor wird in Lagern 12 gelagert und über einen Antrieb 13 in schnelle Drehung versetzt. Die Pumpe weist einen Flansch 6 auf, die Kammer einen Flansch 5. Diese Flansche werden in Kontakt gebracht und über eine Mehrzahl von Flanschschrauben 7 lösbar miteinander verbunden.

Die zweite Abbildung zeigt eine erstes Ausführungsbeispiel eines erfindungsgemäßen Vakuumgehäuses, welches sowohl das Gehäuse der Pumpe als auch der Kammer sein kann. Ein zylindrischer Abschnitt 20 ist aus einem ersten Material gefertigt, beispielsweise einer Aluminiumlegierung. Konzentrisch zu ihm sitzt ein erster Ring 21, welcher aus einem härteren Material, beispielsweise Edelstahl, gefertigt ist. Beide sind über eine Schweißnaht 30 miteinander verbunden. Verschiedene Schweißverfahren können eingesetzt werden, um diese Verbindung herzustellen. Vorteilhaft, aber nicht limitierend, ist an dieser Stelle Reibschweißen anwendbar. Der erste Ring weist eine Schneidkante 23 auf, welche auf der Fläche sitzt und ringförmig auf dieser Fläche um die Durchgangsöffnung umläuft, welche einen Teil der Flanschfläche 26 darstellt. die Schneidkanten werden beim Verbinden der Flansche in den metallischen Dichtungsring 35 gedrückt. Für diesen Dichtungsring werden mechanisch weiche Metalle benutzt, meist Kupfer 35. Die dritte Abbildung zeigt ein nächstes, verbessertes Ausführungsbeispiel. In dieser sitzt der erste Ring 21 innerhalb einer Ausnehmung des zylindrischen Abschnitts 20. Neben der Schneidkante 23 auf der Flanschfläche, welche in den Dichtungsring 35 schneidet, weist der Ring eine zusätzliche Schneidkante 24 in Richtung des Vakuumgehäuses auf. Eine weitere Schneidkante 25 ist am Umfang des Ringes in radialer Richtung nach außen hin angeordnet. Schon durch eine der weiteren Schneidkanten alleine werden Dichtheit und mechanische Stabilität erhöht. Zu dieser mechanischen Stabilität gehört beispielsweise, dass die Verbindung von Ring und zylindrischem Abschnitt auch dann sicher bestehen bleibt, wenn die Flanschverbindung zwischen Kammerflansch und Pumpenflansch gelöst wird. Zusammenwirkend ergibt sich eine Steigerung beider Vorteile. In diesem Beispiel ist der erste Ring eingepresst.

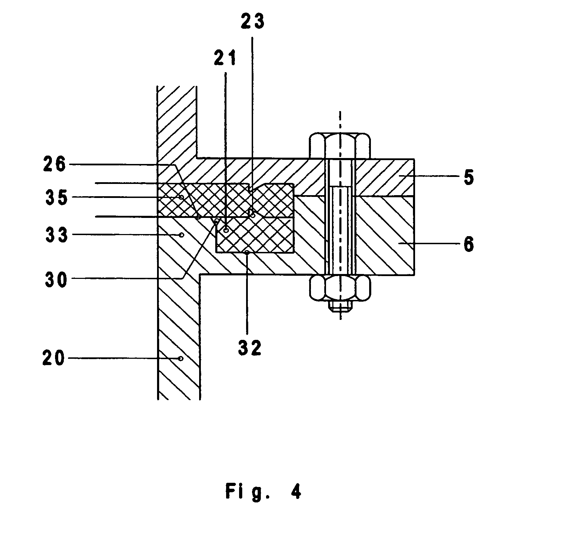

Die Abbildung 4 zeigt ein gegenüber dem zuletzt beschriebenen verbessertes Beispiel. Der erster Ring 21 sitzt in einer Ausnehmung 32 und ist an drei Seiten von Material des zylindrischen Abschnitts 20 umgeben. Ein Vorsprung 33 dieses zylindrischen Abschnitts ragt in das Innere des ersten Ringes 21 hinein. Vorteilhaft endet er in axialer Richtung an der Flanschfläche 26. Eine Schweißnaht 30 verbindet Ring 21 und Abschnitt 20. Zum einen fixiert sie die Anordnung, zum anderen dichtet sie die Anordnung sehr gut gegen Durchtreten von Gasen ab. Die Schweißnaht ist aufgrund ihrer stirnseitigen Anordnung besonders einfach herzustellen. Auch hier können wieder verschiedene Schweißverfahren eingesetzt werden. Die Anordnung der Schweißnaht zwischen dem Vorsprung 33 und dem ersten Ring 21 ist vorteilhaft, da sie so zur inneren Seite des Ringes orientiert ist. Hierdurch wird vermieden, das eventuell im Raum zwischen dem ersten Ring und Abschnitt 20 befindliches Gas in den Hochvakuumbereich gelangen kann.

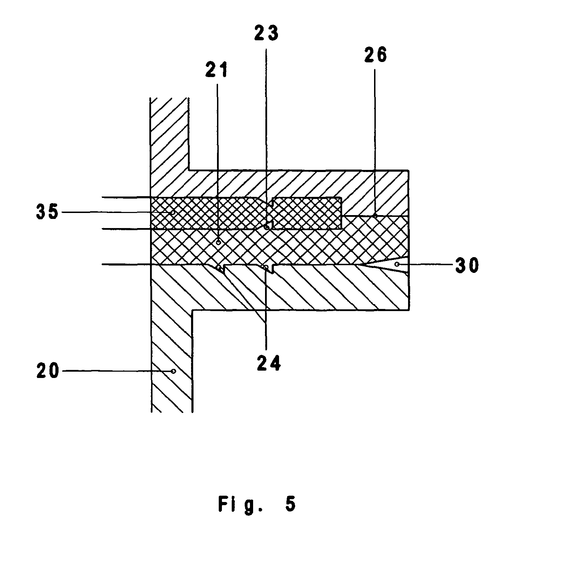

In dem Ausführungsbeispiel nach Abbildung 5 sitzt der erste Ring 21 ebenfalls konzentrisch zum zylindrischen Abschnitt 20, diesmal allerdings nicht in einer Ausnehmung. Eine in den metallischen Dichtungsring 35 schneidende Schneidkante 23 ist auf der Flanschfläche 26 vorgesehen. Zwei Schneidkanten 24 sind in Richtung des zylindrischen Abschnittes vorgesehen, je nach Platzverhältnissen können mehr als zwei Schneidkanten verwendet werden, um eine hohe Dichtheit zu erreichen. In diesem Beispiel ist der erste Ring mit dem zylindrischen Abschnitt über eine Schweißnaht 30 verbunden. Verschiedene Schweißverfahren können eingesetzt werden. Vorteilhaft kann das Reibrührschweißen angewendet werden, welches besonders stabile und damit mechanisch sichere Schweißnähte erzeugt. Je nach Platz kann eine Scheißnaht auch am inneren Umfang der Kontaktstelle zwischen zylindrischem Abschnitt und Ring vorgesehen werden.

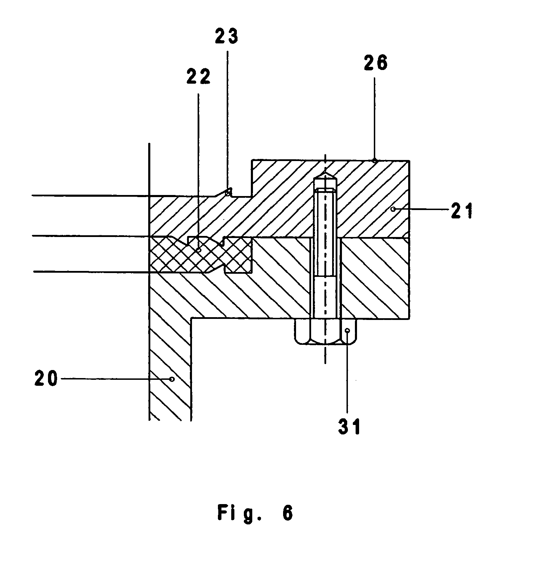

Ein Beispiel aus dem Stand der Technik, dargestellt in Abbildung 6, soll zwei weitere vorteilhafte Maßnahmen verdeutlichen. Zunächst wird als erste Maßnahme ein zweiter Ring 22 in einer Ausnehmung zwischen zylindrischem Abschnitt 20 und erstem Ring 21 vorgesehen. Dieser besteht aus mechanisch weicherem Material als der zylindrische Abschnitt und der erste Ring, beispielsweise aus Kupfer. In ihn drücken sich Schneidkanten, die sowohl auf dem ersten Ring als auch auf dem zylindrischen Abschnitt vorgesehen sein können. Als zweite Maßnahme ist der erste Ring 21 über eine Mehrzahl von Schrauben 31 mit dem zylindrischen Abschnitt verbunden. In der Abbildung sind die Schrauben so eingezeichnet, dass sie durch im zylindrischen Abschnitt befindliche Bohrungen gesteckt und in Gewinde im erste Ring eingeschraubt werden. Je nach geometrischen Verhältnissen kann es sinnvoll sein, die Bohrungen im ersten Ring und die Gewinde im zylindrischen Abschnitt vorzusehen.

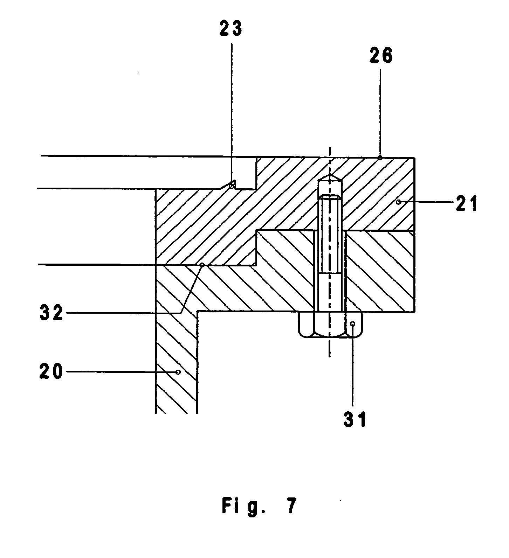

In einem weiteren Beispiel aus dem Stand der Technik zeigt die Abbildung 7 eine einfache Lösung. im zylindrischen Abschnitt 21 ist eine Ausnehmung 32 vorgesehen. Der erste Ring 21 ist ihr angepasst, so dass eine Stufe entsteht, welche die Vakuumdichtheit erhöht. Der erste Ring ist durch Schrauben 31 fixiert, die wie schon im vorherigen Beispiel entweder wie eingezeichnet in den ersten Ring oder in umgekehrter Richtung von der Flanschseite her eingeschraubt werden können. Wiederum ist eine Schneidkante 23 auf der Flanschfläche 26 vorgesehen.

Denkbar ist es, die vorgestellten Maßnahmen durch Beschichtungen zu ergänzen. Diese werden ganz oder teilweise auf den Berührungsflächen, insbesondere auf den Schneiden vorgesehen. Dies führt zu einer Härtung dieser Schneidflächen, so dass mechanische Stabilität und Dichtheit weiter verbessert werden. Natürlich ist es auch denkbar, die der Schneide gegenüberstehende Fläche geeignet zu beschichten.

Die in den Ausführungsbeispielen beschriebenen und in den Ansprüchen vorgeschlagenen Maßnahmen können in geeigneter Weise kombiniert und angewendet werden. In diesem Sinne sind die gezeigten Beispiele nicht als Beschränkung sondern als Anregung zu verstehen.

## Patentansprüche

1. Vakuumpumpe (2) mit einem zylindrischen Abschnitt (20) und einem Flansch (6), wobei ein erster Ring (21), welcher eine ringförmige und in axialer Richtung von der Vakuumpumpe wegweisende Schneidkante (23) auf einer wenigstens zum Teil die Flanschfläche (26) bildenden Fläche besitzt, konzentrisch zum zylindrischen Abschnitt angeordnet ist und aus einem härteren Material als das Gehäuse der Vakuumpumpe besteht, **dadurch gekennzeichnet, dass** erster Ring und zylindrischer Abschnitt durch Reibschweißen oder Reibrührschweißen fest miteinander verbunden sind.

2. Vakuumgehäuse nach einem der vorhergehenden Ansprüche, **dadurch gekennzeichnet, dass** der erste Ring (21) eine zweite Schneide (24) in axialer Richtung und auf das Vakuumgehäuse hinweisend aufweist.

3. Vakuumgehäuse nach einem der vorhergehenden Ansprüche, **dadurch gekennzeichnet, dass** der erste Ring (21) eine dritte Schneide (25) ausweist, die in radialer Richtung angeordnet ist.

4. Vakuumgehäuse nach einem der vorhergehenden Ansprüche, **dadurch gekennzeichnet, dass** ein zweiter Ring (22) in axialer Richtung zwischen erstem Ring (21) und zylindrischen Abschnitt (20) angeordnet ist und aus einem Material besteht, welches weicher als das des zylindrischen Abschnitts und des ersten Rings ist.

5. Vakuumgehäuse nach Anspruch 4, **dadurch gekennzeichnet, dass** der zweite Ring (22) aus einer Kupferlegierung besteht.

6. Vakuumgehäuse nach einem der vorhergehenden Ansprüche, **dadurch gekennzeichnet, dass** der erste Ring (21) aus einem Edelstahl besteht.

7. Vakuumgehäuse nach einem der vorhergehenden Ansprüche, **dadurch gekennzeichnet, dass** der zylindrische Abschnitt (20) aus einer Aluminiumlegierung besteht.

## Claims

1. Vacuum pump (2) having a cylindrical portion (20) and a flange (6), wherein a first ring (21), which at a surface that at least partially forms the flange surface (26) possesses an annular cutting edge (23) oriented axially away from the vacuum pump, is disposed concentrically with the cylindrical portion and is made from a harder material than the housing of the vacuum pump, **characterized in that** first ring and cylindrical portion are connected in a fixed manner to one another by friction welding or friction stir welding.

2. Vacuum housing according to one of the preceding claims, **characterized in that** the first ring (21) has a second cutting edge (24) oriented in axial direction and towards the vacuum housing.

3. Vacuum housing according to one of the preceding claims, **characterized in that** the first ring (21) has a third cutting edge (25) that is disposed in radial direction.

4. Vacuum housing according to one of the preceding claims, **characterized in that** a second ring (22) is disposed in axial direction between first ring (21) and cylindrical Portion (20) and is made of a material that is softer than the material of the cylindrical portion and the first ring.

5. Vacuum housing according to claim 4, **characterized in that** the second ring (22) is made of a copper alloy.

6. Vacuum housing according to one of the preceding claims, **characterized in that** the first ring (21) is made of a high-grade steel.

7. Vacuum housing according to one of the preceding claims, **characterized in that** the cylindrical portion (20) is made of an aluminium alloy.

## Revendications

1. Pompe à vide (2) comprenant un tronçon cylindrique (20) et un collet (6), dans laquelle un premier anneau (21), réalisé en un matériau plus dur que le corps de la pompe à vide et agencé de façon concentrique par rapport au tronçon cylindrique, est doté d'une arête annulaire (23) orientée axialement en direction opposée à la pompe à vide et agencée sur une face formant au moins pour partie la surface de collet (26), **caractérisée par le fait que** ledit premier anneau et ledit tronçon cylindrique sont joints inamovibles par soudage par friction ou soudage par friction-malaxage (FSW).

2. Pompe à vide selon la revendication 1, **caractérisée par le fait que** le premier anneau (21) est doté d'une deuxième arête (24) orientée axialement en direction de la pompe à vide.

3. Pompe à vide selon l'une quelconque des revendications précédentes, **caractérisée par le fait que** le premier anneau (21) est doté d'une troisième arête (25) agencée dans le sens radial.

4. Pompe à vide selon l'une quelconque des revendications précédentes, **caractérisée par le fait qu'**un second anneau (22), réalisé en un matériau plus doux que celui du tronçon cylindrique (20) et du premier anneau (21), est agencé axialement entre ces derniers.

5. Pompe à vide selon la revendication 4, **caractérisée par le fait que** le second anneau (22) est réalisé en un alliage de cuivre.

6. Pompe à vide selon l'une quelconque des revendications précédentes, **caractérisée par le fait que** le premier anneau (21) est réalisé en un acier inoxydable.

7. Pompe à vide selon l'une quelconque des revendications, précédentes, **caractérisée par le fait que** le tronçon cylindrique (20) est réalisé en un alliage d'aluminium.
